# EUROPEAN PATENT SPECIFICATION

(11) **EP 4 130 316 B1**
(45) Date of publication and mention of the grant of the patent: **06.05.2026**
(21) Application number: 21761208.4
(22) Date of filing: 07.01.2021
(51) Int. Cl.: C22C 38/44, C22C 38/46, C21D 8/021, C21D 8/02, C22C 38/04, C21C 5/28, C21D 9/46, C22C 38/02, C21D 8/0221, C21D 8/0247, C21C 7/072, C21D 6/00, C21D 1/26, C21D 1/25, C21D 1/56, C21C 7/10

(54) **PRE-HARDENED MIRROR MOLD STEEL PLATE AND MANUFACTURING METHOD THEREFOR**
VORGEHÄRTETE SPIEGELFORMSTAHLPLATTE UND HERSTELLUNGSVERFAHREN DAFÜR
PLAQUE D'ACIER DE MOULE À MIROIR PRÉ-DURCI ET SON PROCÉDÉ DE FABRICATION

(30) Priority: 27.02.2020 CN 202010122539
(43) Date of publication of application: 08.02.2023
(73) Proprietor: Jiangyin Xingcheng Special Steel Works Co., Ltd, Jiangyin, Jiangsu 214429 (CN)
(72) Inventor: HE, Guangxia, Jiangyin, Jiangsu 214429 (CN); WU, Yang, Jiangyin, Jiangsu 214429 (CN); LI, Guozhong, Jiangyin, Jiangsu 214429 (CN); XU, Xiaohong, Jiangyin, Jiangsu 214429 (CN); BAI, Yun, Jiangyin, Jiangsu 214429 (CN); MIAO, Pifeng, Jiangyin, Jiangsu 214429 (CN); HUANG, Jun, Jiangyin, Jiangsu 214429 (CN); GE, Henggui, Jiangyin, Jiangsu 214429 (CN); DI, Menglong, Jiangyin, Jiangsu 214429 (CN); MENG, Yu, Jiangyin, Jiangsu 214429 (CN)
(74) Representative: Huang, Liwei
(86) International application number: PCT/CN2021/070626
(87) International publication number: WO 2021/169621

(56) References cited:
- EP-A1- 3 222 744
- EP-A1- 3 502 296
- CN-A- 104 911 321
- CN-A- 104 988 434
- CN-A- 107 974 623
- CN-A- 109 234 495
- CN-A- 110 396 648
- CN-A- 111 321 337
- JP-A- 2009 046 721
- JP-A- 2017 179 596

## Description

### TECHNICAL FIELD

The invention belongs to the technical field of iron-based alloys, and in particular relates to a pre-hardened steel plate for a mirror-surface mold, and the manufacture method thereof.

### BACKGROUND

As manufacturing enterprises upgrade towards an automatic production, the manufacture of products gradually shifts from relying on manual-intensive labors to relying on industrial equipment, so it is necessary to improve the level of automation in manufacturing. The large-scale and automatic production equipment promotes our country's plastic mold manufacturing industry to develop in the direction of a larger module, a higher uniformity and a better mirror surface. This requires the steels for plastic molds to have a thicker gauge, a higher hardenability and more uniform properties. This is mainly shown as a larger thickness, a higher and more uniform hardness, and higher density requirements. At the same time, in order to ensure good market competitiveness, the manufacturing plant requires a mold steel having a short production cycle, a low cost, and a high cost performance.

The widely used pre-hardened mold steels are e.g. 3Cr2Mo and 3Cr2MnNiMo, and its hardness ranges from 28-36 HRC, which can no longer meet the requirements in high dimensional accuracy and in high polishing performance for mirror-surface molds. In order to obtain a better polishing effect, the pre-hardened hardness of the mold steel requires 38-42 HRC. This type of steel plate is mainly NAK80 pre-hardened steel from Daido, Japan. However, this steel has a high content of alloy elements and is mostly produced by steel ingot + forging + quenching and tempering process. The production cycle lasts long, the cost is high, and the price is expensive. In recent years, some domestic steel mills have added Cr, Mo, V and micro-alloy elements on the basis of 3Cr2Mo to obtain a higher-quality steel for plastic molds.

The patent publication CN102650021 A discloses adding Mn on the basis of 3Cr2Mo, and adding micro-alloy element Nb, so as to obtain a pre-hardened steel of a bainite steel with a high hardenability. Its hardness is 30.6-33.6 HRC, and does not belong to a mold steel of high hardness. Besides, the used manufacturing process is steel ingot + forging, the yield is low, the production cycle lasts long, and the production cost is high.

The patent publication CN109136736 A discloses a vanadium-containing steel plate for plastic molds, which is made by continuous casting and rolling, has a short production time and a simple process. Compared with the process of steel ingot + forging, the production cost is lower. However, the thickness of the steel plate is 15-80 mm, and the hardness is 280-330 HBW (equivalent to 29-35 HRC). There is still no higher breakthrough in hardness.

The patent publication CN107699801 A produces a V-containing steel for plastic molds, having fine grains and uniform hardness. However, the production of the steel plate requires high-temperature forging, quenching and tempering treatment, and secondary tempering. The production cycle lasts long, the manufacture process is relatively complicated, and a complex heat treatment also significantly increases the production cost. Besides, the hardness of the core of the steel plate in this publication is only higher than 30 HRC, but cannot be higher.

The patent publications CN107974636 A and CN109706397 A disclose some high-hardness steels for plastic molds, having good hardenability and high hardness. However, they all adopt induction furnace, electroslag remelting, casting steel ingots, and forging into materials. The production cycle lasts long and the production cost is high. EP 3 502 296 A1 discloses a thick plate with high and homogenous hardness.

### CONTENT OF THE INVENTION

The technical problem to be solved by the present invention is to aim at the above-mentioned prior arts and to provide a pre-hardened steel plate for a mirror-surface mold. The steel plate not only has high hardness, but also has good uniformity in hardness along the direction of thickness of the steel plate, and a curve fluctuation of hardness along the thickness is ≤ 2 HRC, and its flaw-detection level meet the requirements of level I according to GB/T2970.

The invention is set out in the appended set of claims.

The pre-hardened steel plate for a mirror-surface mold in the present invention is based on 3Cr2Mo, wherein the contents of easily-segregated elements like carbon and Cr are reduced, which improves the hardness uniformity of the steel plate, wherein the contents of relatively cheap elements like Si and Mn are increased and an appropriate amount of alloy elements are added, which refines grains and increase the hardenability of the steel plate and improve the strength and hardness of the steel. Thereby, a pre-hardened steel for a mirror-surface mold, with excellent comprehensive performance and high cost performance, is obtained. The chemical constituents are C: 0.28 to 0.36 %, Si: 0.50 to 0.80 %, Mn: 1.20 to 1.50 %, P ≤ 0.020 %, S ≤ 0.010 %, Cr: 1.30 to 1.80 %, Mo: 0.30 to 0.50 %, Ni: 0.65 to 0.90 %, V: 0.15 to 0.30 %, H ≤ 1.5 ppm, and the balance is Fe and inevitable impurities. The following is an explanation of the effects and proportion analyses regarding the mainly added elements in the steel plate of the present invention.

Si: Si element has the effect of deoxidation and strengthening solid solution in steel. Si solid solution in austenite can inhibit the formation of pearlite, promote bainite/martensite transformation, and increase the hardness of steel plate. The content of Si in the present invention is controlled to be 0.50-0.80%.

Mn: Mn element can delay the occurrence of transformation of ferrite at high temperature, to improve the strength and hardenability of steel. The content of Mn in the present invention is controlled to be 1.20-1.50%.

Cr: Cr plays a role of strengthening solid solution in the steel for plastic molds, which improves the strength and hardness of the steel. However, if the content of Cr is too high, segregation will easily occur. Thus, the content of Cr in the present invention is controlled to be 1.30-1.80%.

Mo: Molybdenum can form carbides in steel, which can improve the hardenability of the steel plate and has a effect of secondary hardening. Molybdenum can also increase the tempering resistance of steel. When molybdenum is used in combination with chromium and manganese, the temper brittleness can be reduced. The content of Mo in the present invention is controlled to be 0.30-0.50%.

Ni: Nickel is a strengthening element in steel, which can improve the strength and hardenability of steel, and at the same time, it has little damage to the toughness of steel. However, the cost of nickel element is high. In our invention, an appropriate amount of 0.65-0.90% is added.

V: Vanadium has a strong affinity with carbon/nitrogen, and thus forms corresponding carbon/nitride. They are diffusely distributed. It refines the structure, reduces the overheating sensitivity of steel, and increases the tempering stability. The content of V in the present invention is controlled to be 0.15-0.30%.

The effects of the above alloying elements are: by using alloying elements such as Cr, Mo, and Ni, we improve the hardenability of the steel plate and the strength of the steel plate, ensure the hardness of the core of the steel plate having a large thickness, improve the tempering stability of the steel plate, and expand the window of a tempering process for the steel plate; vanadium and carbon in the steel plate form carbides, which can prevent the grains from growing, it is combined with the rolling process to refine the grain, thereby improving the uniformity of the performance of the steel plate; elements such as Si and Mn can expand the area of bainite formation in the steel plate, thereby obtain a relatively stable bainite structure after rolling, thus, the steel plate under a normalizing process in the present invention can achieve a hardness falling into the hardness range of a quenched-and-tempered steel, so that the whole steel plate can obtain a higher and more uniform hardness.

A method of manufacturing the steel plate corresponding to the above element designs includes the following steps:
(1) smelting of molten steel: molten iron is pretreated and smelted in an oxygen converter, followed by refining in a ladle furnace and then vacuum degassing;
(2) continuous casting: continuous casting of molten steel into a continuous casting slab with a thickness of 370-450 mm and a width of 1600-2600 mm;
(3) rolling: heating the continuous casting slab to 1150 °C - 1250 °C, and the time in the furnace is calculated by multiplying the thickness of the casting slab in cm with 7-14 min/cm;
   in an initial rolling stage, using a high-temperature rolling, and the rolling temperature is controlled to be not lower than 1020 °C, in a single pass the reduction amount is 40-55 mm and the highest reduction rate is ≥18%, so that a rolling force penetrates into the core of the slab, so as to roll for recrystallization zones;
   in a second stage which is finish rolling, rolling a 80-200 mm thick steel plate obtained from the initial rolling stage into a target thickness, and finishing a shape of the plate, so as to achieve the target thickness which is 20-180 mm thick,
   after rolling, the steel plate is moved off the assembly line, and is stacked and is slowly cooled to room temperature;
(4) heat treatment: including two steps, i.e. normalizing and tempering,
   after the stacked cooling, heating the steel plate to 870-910 °C, with a holding time of 2-2.5 min/mm,
   removing the steel plate out of furnace, air cooling to room temperature, so that bainite is fully formed in the steel plate;
   after normalizing, tempering the steel plate according to the thickness of the steel plate: in case of 20-100 mm thick steel plate, the tempering temperature is 590-620 °C, in case of the steel plate thicker than 100mm, the tempering temperature is 580-610 °C, and a holding time is calculated by multiplying plate thickness in mm with 3-4 min/mm.

Compared with the prior arts, the present invention has following advantages: the mold steel plate of the present invention has a high hardness, a good hardenability (with uniform hardness and small fluctuation in the thickness direction of the steel plate), a compact internal structure, and the flaw detection level meets the requirements of of level I in GB/T2970. Moreover, the thickness of the continuous casting product can reach 180 mm. The process has high operability and high production efficiency. both alloying elements and production costs are economical.

### DESCRIPTION OF DRAWINGS

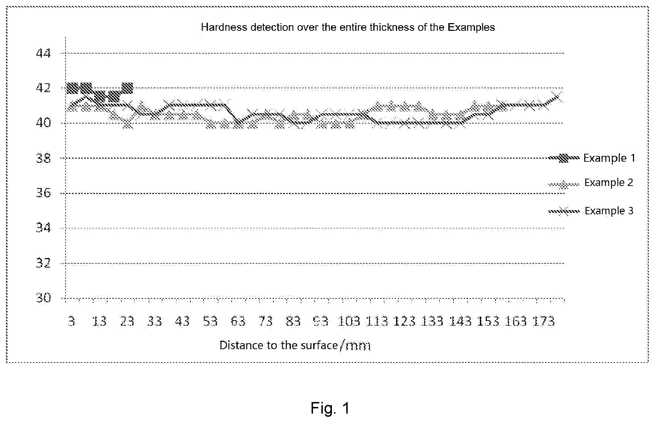

Fig. 1 is a fluctuation curve of hardness over the entire thickness of the Examples of the present invention.

### DETAILED EMBODIMENTS

The present invention will be further described in detail below in conjunction with the examples. The examples described below are exemplary and intended to explain the present invention, but should not be understood as limitations to the present invention.

### Example 1

The chemical constituents of this example are, by mass percentages: C: 0.33 % , Si: 0.60%, Mn: 1.40%, P: 0.010%, S: 0.001%, Cr: 1.59%, Mo: 0.39%, Ni: 0.78%, V: 0.21%, H ≤ 0.8 ppm, and the balance is Fe and inevitable impurities.

The manufacturing method is below:
(1) molten iron is pretreated and smelted in an oxygen converter,
   followed by refining in a ladle furnace with a specific refining slag. It can effectively remove some harmful elements such as S from the molten steel, and the refining slag is used to absorb and remove S elements as much as possible. Then, vacuum degassing lasts for 30 minutes, soft blowing of argon for 20 minutes. It can reduce the content of H in the molten steel to 0.8 ppm. Before the ladle is sent to the continuous casting equipment, the surface of the ladle is covered with carbonized rice husk for heat preservation, so as to prevent the exposure and secondary oxidation of molten steel.
(2) the continuous casting process is performed with a ladle slag detection, and a pouring without a protection against oxidation; a superheat degree in the pouring is controlled to be 10-25 °C; a dynamic soft reduction technology is used to reduce center segregation and center porosity of the slab. Finally, a continuous casting slab with a thickness of 370 mm and a width of 2200 mm is obtained. The continuous casting slab has a low center segregation of C 0.5, a center porosity of 0.5, and has no other defects.
(3) heating the continuous casting slab to 1240 °C, and a time in the furnace is 8 hours. In an initial rolling stage, the rolling temperature is 1032 °C, in each pass the reduction amount is 10 mm more than a conventional model, above 40 mm, and the maximum reaches 55 mm, the highest reduction rate reaches 20%. The initial rolling is rolling in the recrystallization zone, and the rolling deformation reaches the core of the steel plate. An 80 mm thick intermediate billet is obtained. A second stage of rolling is finish rolling of the plate shape and the plate thickness. The rolling is uncontrolled and thus free rolling. The intermediate billet is rolled into a 28 mm thick steel plate. After rolling, the steel plate is moved off the assembly line at high temperature and stacked and slowly cooled to room temperature.
(4) after the stacked cooling, normalizing the steel plate in a continuous furnace at 880 °C with a holding time of 2 min/mm,
removing the steel plate out of furnace, air cooling to room temperature.

After normalizing, tempering the steel plate at 620 °C with a holding time of 90 min.

After the tempering is completed, the steel plate is inspected, and the flaw detection level meets the requirements of level I in GB/T2970. The test results regarding hardness are shown in Table 1.

### Example 2

The chemical constituents of this example are, by mass percentages: C: 0.35 % , Si: 0.60 %, Mn: 1.41 %, P: 0.011 %, S: 0.002 %, Cr: 1.60 %, Mo: 0.40 %, Ni: 0.78%, V: 0.21 %, H≤0.8ppm, and the balance is Fe and inevitable impurities.

The manufacturing method is below:
(1) molten iron is pretreated and smelted in an oxygen converter,
   followed by refining in a ladle furnace with a specific refining slag. It can effectively remove some harmful elements such as S from the molten steel. Then, vacuum degassing lasts for 35 minutes, soft blowing of argon for 20 minutes. It can reduce the content of H in the molten steel to 0.6 ppm. Before the ladle is sent to the continuous casting equipment, the surface of the ladle is covered with carbonized rice husk for heat preservation, so as to prevent the exposure and secondary oxidation of molten steel.
(2) the continuous casting process is performed with a ladle slag detection, and a pouring without a protection against oxidation; a superheat degree in the pouring is controlled to be 10-25 °C; a dynamic soft reduction technology is used to reduce center segregation and center porosity of the slab. Finally, a continuous casting slab with a thickness of 450 mm and a width of 2100 mm is obtained. The continuous casting slab has a low center segregation of C 0.5, a center porosity of 0.5, and has no other defects.
(3) heating the continuous casting slab to 1250 °C, and a time in the furnace is 9.5 hours. In an initial rolling stage, the rolling temperature is 1030 °C, in each pass the reduction amount is 12 mm more than a conventional model, and the maximum reaches 52 mm, the highest reduction rate reaches 20%. A second stage of rolling is finish rolling of the plate shape and the plate thickness. The rolling is uncontrolled.

The thickness at the start of rolling is 180 mm, and it is finally rolled into a 160 mm thick steel plate. After rolling, the steel plate is moved off the assembly line at high temperature and stacked and slowly cooled to room temperature. The steel plate after rolling has a structure of bainite.
(4) after the stacked cooling, normalizing the steel plate in a continuous furnace at 890 °C with a holding time of 2.5 min/mm,
removing the steel plate out of furnace, air cooling to room temperature.

After normalizing, tempering the steel plate at 610 °C with a holding time of 488 min.

After the tempering is completed, the steel plate is inspected, and the flaw detection level meets the requirements of level I in GB/T2970. The test results regarding hardness are shown in Table 1.

### Example 3

The chemical constituents of this example are, by mass percentages: C: 0.34%, Si: 0.61%, Mn: 1.42%, P: 0.012%, S: 0.002%, Cr: 1.62%, Mo: 0.40%, Ni: 0.79%, V: 0.22%, H ≤ 0.8ppm, and the balance is Fe and inevitable impurities.

The manufacturing method is below:
(1) molten iron is pretreated and smelted in an oxygen converter,
   followed by refining in a ladle furnace with a specific refining slag. It can effectively remove some harmful elements such as S from the molten steel. Then, vacuum degassing lasts for 33 minutes, soft blowing of argon for 20 minutes. It can reduce the content of H in the molten steel to 0.8 ppm. Before the ladle is sent to the continuous casting equipment, the surface of the ladle is covered with carbonized rice husk for heat preservation, so as to prevent the exposure and secondary oxidation of molten steel.
(2) the continuous casting process is performed with a ladle slag detection, and a pouring without a protection against oxidation; a superheat degree in the pouring is controlled to be 10-25 °C; a dynamic soft reduction technology is used to reduce center segregation and center porosity of the slab. Finally, a continuous casting slab with a thickness of 450 mm and a width of 2100 mm is obtained. The continuous casting slab has a low center segregation of C 0.5, a center porosity of 0.5, and has no other defects.
(3) heating the continuous casting slab to 1240 °C, and a time in the furnace is 8 hours. In an initial rolling stage, the rolling temperature is 1035 °C, in each pass the reduction amount is 13 mm more than a conventional model, and the maximum reaches 50 mm, the highest reduction rate reaches 17%. A second stage is uncontrolled rolling, and is finish rolling of the plate shape and the plate thickness, with a total reduction amount of 20 mm, and a total reduction rate of 10%. The thickness at the start of rolling is 200 mm, and it is finally rolled into a 180 mm thick steel plate. After rolling, the steel plate is moved off the assembly line at high temperature and stacked and slowly cooled to room temperature.
(4) after the stacked cooling, normalizing the steel plate in a continuous furnace at 890 °C with a holding time of 2.5 min/mm,
removing the steel plate out of furnace, air cooling to room temperature.

After normalizing, tempering the steel plate at 600 °C with a holding time of 550 min.

After the tempering is completed, the steel plate is inspected, and the flaw detection level meets the requirements of level I in GB/T2970. The test results regarding hardness are shown in Table 1.

**Table 1 Test results of hardness of the examples**

| No. | thickness of steel plate /mm | hardness on the surface (HRC) | hardness in the core (HRC) |
|---|---|---|---|
| Example 1 | 28 | 42 | 41.5 |
| Example 2 | 160 | 41 | 40 |
| Example 3 | 180 | 41 | 40 |

The rolling method in the above-mentioned Examples 1 to 3 can make the density of the steel plate higher, and the steel plate after rolling has a more stable bainite structure, so that the steel plate after normalizing can reach a hardness falling into the hardness range of a quenched-and-tempered steel, and the hardness fluctuation of the whole plate is small, having a better hardness uniformity.

## Claims

1. A pre-hardened steel plate for a mirror-surface mold, whose chemical constituents by mass percentages are C: 0.28 to 0.36 %, Si: 0.50 to 0.80 %, Mn: 1.20 to 1.50 %, P ≤ 0.020 %, S ≤ 0.010 %, Cr: 1.30 to 1.80 %, Mo: 0.30 to 0.50 %, Ni: 0.65 to 0.90 %, V: 0.15 to 0.30 %, H ≤ 1.5 ppm, and the balance is Fe and inevitable impurities;
the steel plate is not quenched-and-tempered, and the steel plate has a thickness of 20-180 mm, has a hardness of 38-42 HRC, and has a hardness fluctuation over the entire thickness ≤ 2 HRC, and a flaw-detection level meeting the requirement of level I in GB/T2970.

2. A method of manufacturing the pre-hardened steel plate for a mirror-surface mold according to claim 1, comprising following steps:
(1) smelting of molten steel: molten iron is pretreated and smelted in an oxygen converter, followed by refining in a ladle furnace and then vacuum degassing; wherein the vacuum degassing lasts for at least 30 minutes, soft blowing of argon for at least 20 minutes, so as to reduce the content of H in the molten steel and to make non-metallic inclusions in the steel to float;
(2) continuous casting: continuous casting of molten steel into a continuous casting slab with a thickness of 370-450 mm and a width of 1600-2600 mm; wherein the continuous casting process is cooperated with a ladle slag detection, and a pouring without a protection against oxidation; a superheat degree in the pouring is ≤ 25 °C; in the continuous casting process, using a dynamic soft reduction technology to reduce center segregation and center porosity of the slab;
(3) rolling: heating the continuous casting slab to 1150 °C - 1250 °C, and a time in the furnace is calculated by multiplying the thickness of the casting slab in cm with 7-14 min/cm;
in an initial rolling stage, using a high-temperature rolling, and the rolling temperature is controlled to be not lower than 1020 °C, in a single pass a reduction amount is 40-55 mm and the highest reduction rate is ≥ 18 %, so that a rolling force penetrates into the core of the slab, so as to roll for recrystallization zones;
in a second stage which is finish rolling, rolling a 80-200 mm thick steel plate obtained from the initial rolling stage into a target thickness, and finishing a shape of the plate, so as to achieve the target thickness which is 20-180 mm thick,
after rolling, the steel plate is moved off an assembly line, and is stacked and is slowly cooled to room temperature;
(4) heat treatment: including two steps, i.e. normalizing and tempering, that is,
after the stacked cooling, heating the steel plate to 870-910 °C, with a holding time of 2-2.5 min/mm,
removing the steel plate out of furnace, air cooling to room temperature, so that bainite is formed in the steel plate;
after normalizing, tempering the steel plate according to the thickness of the steel plate; wherein the tempering is performed according to different thickness of steel plate: in case of 20-100 mm thick steel plate, the tempering temperature is 590-620 °C, in case of the steel plate thicker than 100 mm, the tempering temperature is 580-610°C, and a holding time is calculated by multiplying plate thickness in mm with 3-4 min/mm.

## Patentansprüche

1. Vorgehärtete Stahlplatte für eine hochglanzpolierte Form, deren chemische Bestandteile in Masseprozent C: 0,28 bis 0,36 %, Si: 0,50 bis 0,80 %, Mn: 1,20 bis 1,50 %, P ≤ 0,020 %, S ≤ 0,010 %, Cr: 1,30 bis 1,80 %, Mo: 0,30 bis 0,50 %, Ni: 0,65 bis 0,90 % V: 0,15 bis 0,30 %, H ≤ 1,5 ppm sind und der Rest Fe und unvermeidbare Verunreinigungen sind;
wobei die Stahlplatte nicht abgeschreckt-und-angelassen ist und die Stahlplatte eine Dicke von 20-180 mm aufweist, eine Härte von 38-42 HRC aufweist und eine Härteschwankung über die gesamte Dicke ≤ 2 HRC aufweist, und wobei ein Fehlererkennungsniveau die Anforderung des Niveaus I in GB/T2970 erfüllt.

2. Verfahren zum Herstellen der vorgehärteten Stahlplatte für eine hochglanzpolierte Form nach Anspruch 1, umfassend die folgenden Schritte:
(1) Schmelzen von geschmolzenem Stahl: wobei geschmolzenes Eisen vorbehandelt und in einem Sauerstoffkonverter geschmolzen wird, gefolgt von einer Raffination in einem Pfannenofen und anschließendem Vakuumentgasen; wobei das Vakuumentgasen mindestens 30 Minuten dauert, mindestens 20 Minuten lang sanftes Blasen von Argon, um den Gehalt an H in dem geschmolzenen Stahl zu reduzieren und nichtmetallische Einschlüsse in dem Stahl zum Schwimmen zu bringen;
(2) Stranggießen: Stranggießen von geschmolzenem Stahl zu einer Stranggießbramme mit einer Dicke von 370-450 mm und einer Breite von 1600-2600 mm; wobei der Stranggießprozess mit einer Pfannenschlackenerkennung und einem Gießen ohne Oxidationsschutz zusammenwirkt; ein Überhitzungsgrad beim Gießen ≤ 25 °C beträgt; im Stranggießprozess eine dynamische Soft-Reduction-Technologie verwendet wird, um Mittensegregation und Mittenporosität der Bramme zu verringern;
(3) Walzen: Erhitzen der Stranggießbramme auf 1150 °C - 1250 °C, und wobei eine Zeit im Ofen berechnet wird, indem die Dicke der Gießbramme in cm mit 7-14 min/cm multipliziert wird;
in einer anfänglichen Walzstufe Verwenden eines Hochtemperaturwalzens, und wobei die Walztemperatur so geregelt wird, dass sie nicht niedriger als 1020 °C ist, in einem einzigen Durchgang ein Reduktionsbetrag 40-55 mm beträgt und die höchste Reduktionsrate ≥ 18 % ist, sodass eine Walzkraft in den Kern der Bramme eindringt, um für Rekristallisationszonen zu walzen;
in einer zweiten Stufe, die Fertigwalzen ist, Walzen einer 80-200 mm dicken Stahlplatte, die aus der anfänglichen Walzstufe erhalten wird, in eine Zieldicke und Fertigstellen einer Gestalt der Platte, um die Zieldicke zu erreichen, die 20-180 mm dick ist,
nach dem Walzen wird die Stahlplatte von einer Montagelinie wegbewegt und gestapelt und langsam auf Raumtemperatur gekühlt;
(4) Wärmebehandlung: beinhaltend zwei Schritte, d. h. Normalisieren und Anlassen, das heißt, nach dem gestapelten Kühlen, Erhitzen der Stahlplatte auf 870-910 °C mit einer Haltezeit von 2-2,5 min/mm,
Entfernen der Stahlplatte aus dem Ofen, Luftkühlen auf Raumtemperatur, sodass Bainit in der Stahlplatte gebildet wird;
nach dem Normalisieren, Anlassen der Stahlplatte gemäß der Dicke der Stahlplatte; wobei das Anlassen gemäß der unterschiedlichen Stahlplattendicke durchgeführt wird: im Falle einer 20-100 mm dicken Stahlplatte beträgt die Anlasstemperatur 590-620 °C, im Falle einer Stahlplatte, die dicker als 100 mm ist, beträgt die Anlasstemperatur 580-610 °C, und eine Haltezeit wird durch Multiplizieren der Plattendicke in mm mit 3-4 min/mm berechnet.

## Revendications

1. Plaque d'acier pré-durcie pour un moule à surface miroir, dont les constituants chimiques en pourcentages massiques sont C : 0,28 à 0,36 %, Si : 0,50 à 0,80 %, Mn : 1,20 à 1,50 %, P ≤ 0,020 %, S ≤ 0,010 %, Cr : 1,30 à 1,80 %, Mo : 0,30 à 0,50 %, Ni : 0,65 à 0,90 %, V : 0,15 à 0,30 %, H ≤ 1,5 ppm, et le reste est constitué de Fe et d'impuretés inévitables ;
la plaque d'acier est non trempée-et-revenue, et la plaque d'acier possède une épaisseur de 20 à 180 mm, possède une dureté de 38 à 42 HRC, et possède une fluctuation de dureté sur toute l'épaisseur ≤ 2 HRC, et un niveau de détection de défaut répondant à l'exigence de niveau I dans la norme GB/T2970.

2. Procédé de fabrication de la plaque d'acier pré-durcie pour un moule à surface miroir selon la revendication 1, comprenant les étapes suivantes :
(1) fusion d'acier fondu : la fonte fondue est prétraitée et fondue dans un convertisseur d'oxygène, suivie d'un affinage dans un four à poche et ensuite un dégazage sous vide ; ledit dégazage sous vide durant au moins 30 minutes, le soufflage doux d'argon pendant au moins 20 minutes, de façon à réduire la teneur en H de l'acier fondu et à faire flotter des inclusions non métalliques dans l'acier ;
(2) coulée continue : coulée continue d'acier fondu en une brame de coulée continue d'une épaisseur de 370 à 450 mm et d'une largeur de 1600 à 2600 mm ; ledit processus de coulée continue coopérant avec une détection de laitier en poche, et un versement sans protection contre l'oxydation ; un degré de surchauffe dans la coulée étant ≤ 25 °C ; dans le processus de coulée continue, utilisation d'une technologie de réduction douce dynamique pour réduire la ségrégation centrale et la porosité centrale de la brame ;
(3) laminage : chauffage de la brame de coulée continue à 1150 °C à 1250 °C, et un temps dans le four est calculé en multipliant l'épaisseur de la brame de coulée en cm par 7 à 14 min/cm ;
dans une étape de laminage initial, utilisation d'un laminage à haute température, et la température de laminage étant régulée pour ne pas être inférieure à 1020 °C, en une seule passe une quantité de réduction est de 40 à 55 mm et le taux de réduction le plus élevé est ≥ 18 %, afin qu'une force de laminage pénètre dans le noyau de la brame, de façon à laminer pour des zones de recristallisation ;
dans une seconde étape qui est le laminage de finition, le laminage d'une plaque d'acier de 80 à 200 mm d'épaisseur obtenue à partir de l'étape de laminage initial dans une épaisseur cible, et la finition d'une forme de la plaque, de façon à atteindre l'épaisseur cible qui est de 20 à 180 mm d'épaisseur,
après le laminage, la plaque d'acier est éloignée d'une chaîne de montage, et est empilée et est lentement refroidie à température ambiante ;
(4) traitement thermique : comprenant deux étapes, à savoir normalisation et revenu, c'est-à-dire
après le refroidissement empilé, le chauffage de la plaque d'acier jusqu'à 870 à 910 °C, avec un temps de maintien de 2 à 2,5 min/mm,
retrait de la plaque d'acier du four, refroidissement à air à température ambiante, afin que de la bainite se forme dans la plaque d'acier ;
après la normalisation, revenu de la plaque d'acier en fonction de l'épaisseur de la plaque d'acier ; ledit revenu étant réalisé selon l'épaisseur différente de la plaque d'acier : dans le cas d'une plaque d'acier d'épaisseur de 20 à 100 mm, ladite température de revenu étant de 590 à 620 °C, dans le cas d'une plaque d'acier d'épaisseur supérieure à 100 mm, ladite température de revenu étant de 580 à 610 °C, et un temps de maintien étant calculé en multipliant l'épaisseur de la plaque en mm par 3 à 4 min/mm.
